# EUROPEAN PATENT APPLICATION

(11) **EP 3 758 213 A1**
(43) Date of publication of application: **30.12.2020**
(21) Application number: 19750640.5
(22) Date of filing: 07.02.2019
(51) Int. Cl.: H02M 7/49, H02J 3/36, H02M 7/25

(54) **POWER CONVERSION DEVICE, POWER-GENERATING SYSTEM, MOTOR DRIVE SYSTEM, AND POWER INTERCONNECTION SYSTEM**

(30) Priority: 07.02.2018 JP 2018020493
(71) Applicant: Tohoku University, Sendai-shi, Miyagi 980-8577 (JP)
(72) Inventor: KATOH, Shuji, Sendai-shi, Miyagi 980-8577 (JP); ENDOH Tetsuo, Sendai-shi, Miyagi 980-8577 (JP)
(74) Representative: Vossius & Partner Patentanwälte Rechtsanwälte mbB
(86) International application number: PCT/JP2019/004516
(87) International publication number: WO 2019/156192

(57) **Abstract**

The present invention provides a small-sized power conversion device, a power-generating system, a motor drive system, and a power interconnection system. A power conversion device (101) has a configuration in which respective phases of a three-phase alternating current are star-connected, and includes star conversion units (150P, 150N) in which three star conversion legs (153R, 153S, 153T) each including two switches connected in series, and at least one capacitor (159) are connected in parallel, and unit converters (108, 109), each being connected to each of the star conversion legs (153R, 153S, 153T) in series. Connection points (NP1, NP2) at which the three star conversion legs (153R, 153S, 153T) are connected are neutral points of the star connection, and each phase of the three-phase alternating current is connected to a switch connection point (151R, 151S, 151T) between the two switches of each of the star conversion legs (153R, 153S, 153T) through the unit converter (108, 109).

## Description

### Technical Field

The present invention relates to a power conversion device, a power-generating system, a motor drive system, and a power interconnection system.

### Background Art

As a power conversion device that outputs a voltage close to a sinusoidal wave without a filter, a modular multilevel converter (hereinafter, referred to as MMC) in which unit converters are connected in series in a cascade manner is known. The MMC has an advantage capable of outputting a high voltage exceeding a withstand voltage of a switching element (Non-Patent Literature 1), and is widely used for a DC power transmission application of several-hundred kV class. In the MMC, unit converters capable of outputting at least two voltages of zero and a predetermined voltage by switching are connected in series, and the output voltages of the unit converters are added together to convert high-voltage power.

### Citation List

### Non-Patent Literature

Non-Patent Literature 1: Makoto Hagiwara and Hirofumi Akagi: "PWM Control and Experiment of Modular Multilevel Converters (MMC)", IEEJ Transactions D, Volume 128, Issue 7, pp. 957 to 965

### Summary of Invention

### Technical Problem

Each of the unit converters in the MMC includes a capacitor, and a voltage of the capacitor or a zero voltage is output by switching. When an output of the capacitor fluctuates, an output of the unit converter also fluctuates, and thus there is a concern that the power of the MMC cannot be converted with accuracy. In the related art, the capacitance of the capacitor is enlarged to suppress the fluctuation of the output voltage of the capacitor. Accordingly, it is necessary to use a large-sized capacitor with large capacitance, and thus there is a problem that it is difficult to downsize the MMC. In addition, due to the disadvantage, an application range of the MMC is practically limited to an application using a voltage that is 10 times or more an element withstand voltage such DC transmission of several-hundred kV classes.

Here, the present invention has been made in consideration of such problems, and an object thereof is to provide a small-sized power conversion device, a power-generating system, a motor drive system, and a power interconnection system.

### Solution to Problem

According to an aspect of the invention, there is provided a power conversion device having a configuration in which respective phases of a three-phase alternating current are star-connected. The power conversion device includes: a star conversion unit that includes three star conversion legs, each including two switches connected in series, and at least one capacitor; and a unit converter that is connected to each of the star conversion legs of the star conversion unit in series. In the star conversion unit, the three star conversion legs and the capacitor are connected in parallel, each phase of the three-phase alternating current is connected to a switch connection point between the two switches of each of the star conversion legs through the unit converter, and a connection point at which the three star conversion legs are connected is a neutral point of the star connection, and the unit converter is connected to the switch connection point of each of the star conversion legs.

According to another aspect of the invention, there is provided a power conversion device having a configuration in which respective phases of a three-phase alternating current are star-connected. The power conversion device includes a positive side star conversion unit and a negative side star conversion unit which include three star conversion legs, each including two switches connected in series, and at least one capacitor. In the positive side star conversion unit, the three star conversion legs and the capacitor are connected in parallel, each phase of the three-phase alternating current is connected to a switch connection point between the two switches of each of the star conversion legs, a connection point at which the three star conversion legs are connected is a first neutral point of the star connection, and a first predetermined voltage or a zero voltage is output between the switch connection point of each of the star conversion legs and the first neutral point. In the negative side star conversion unit, the three star conversion legs and the capacitor are connected in parallel, each phase of the three-phase alternating current is connected to a switch connection point between the two switches of each of the star conversion legs, a connection point at which the three star conversion legs are connected is a second neutral point of the star connection, and a second predetermined voltage different from the first predetermined voltage or a zero voltage is output between the switch connection point of each of the star conversion legs and the second neutral point.

According to still another aspect of the invention, there is provided a power conversion device having a configuration in which respective phases of a three-phase alternating current are star-connected. The power conversion device includes: two star conversion units which includes three star conversion legs, each including two switches connected in series, and at least one capacitor, and in which the three star conversion legs and the capacitor are connected in parallel, and a connection point at which the star conversion legs and the capacitor are connected is a neutral point of the star connection; and a unit converter that is connected to each of the star conversion legs in series through a switch connection point between the two switches of each of the star conversion legs. In one of the star conversion units, each phase of the three-phase alternating current is connected to the switch connection point of each of the star conversion legs through the unit converter. In the other star conversion unit, each phase of a three-phase alternating current different from the three-phase alternating current is connected to the switch connection point of each of the star conversion legs through the unit converter. One of the star conversion units and the other star conversion unit are connected to each other.

According to still another aspect of the invention, there is provided a power-generating system that connects a power generator and a power system through the power conversion device according to any one of claims 1 to 25.

According to still another aspect of the invention, there is provided a motor drive system that connects a power supply and a motor through the power conversion device according to any one of claims 1 to 25.

According to still another aspect of the invention, there is provided a power interconnection system that connects power systems through the power conversion device according to any one of claims 1 to 25.

### Advantageous Effects of Invention

In the power conversion device of the invention, the star conversion unit has a configuration in which three star conversion legs and at least one capacitor are connected in parallel, and a connection point of the three star conversion legs is a neutral point, and thus a total value of AC currents flowing through the star conversion legs of the star conversion unit is zero, and ideally, a fluctuation amount of AC power can be set to approximately zero, and it is possible to suppress a fluctuation of a voltage of the capacitor. Accordingly, in the power conversion device, the fluctuation of the voltage of the capacitor of the star conversion unit can be suppressed, and thus a capacitor with small capacitance can be used as the capacitor of the star conversion unit and downsizing can be realized. As a result, it is possible to provide a small-sized power conversion device, a power-generating system, a motor drive system, and a power interconnection system.

### Brief Description of Drawings

Fig. 1 is a schematic view illustrating an overall configuration of a power conversion device according to an embodiment of the invention.
Fig. 2A and Fig. 2B are schematic views illustrating a unit converter of the embodiment of the invention, and Fig. 2C is a schematic view illustrating a unit converter of another embodiment of the invention.
Fig. 3 is a view illustrating the power conversion device of the invention, a star conversion leg, an output voltage waveform of the unit converter.
Fig. 4 is a schematic view illustrating an overall configuration of a power conversion device of another embodiment of the invention.
Fig. 5 is a schematic view illustrating an overall configuration of a power conversion device of still another embodiment of the invention.
Fig. 6 is a schematic view illustrating an overall configuration of a power conversion device of still another embodiment of the invention.
Fig. 7 is a schematic view illustrating an overall configuration of a power conversion device of still another embodiment of the invention.
Fig. 8 is a schematic view illustrating an overall configuration of a power conversion device of still another embodiment of the invention.
Fig. 9 is a schematic view illustrating an overall configuration of a power conversion device of still another embodiment of the invention.
Fig. 10 is a schematic view illustrating a unit converter of still another embodiment of the invention.
Fig. 11 is a schematic view illustrating an overall configuration of a power conversion device of still another embodiment of the invention.
Fig. 12 is a schematic view illustrating an overall configuration of a power conversion device of still another embodiment of the invention.
Fig. 13 is a schematic view illustrating an overall configuration of a power conversion device of still another embodiment of the invention.
Fig. 14A is a graph illustrating a voltage waveform of a voltage that is desired to output between a terminal 102R and a terminal P, and a voltage waveform of an output voltage of a star conversion leg 153R of a positive side star conversion unit 1500P, and Fig. 14B is a graph illustrating a voltage waveform of an output voltage of a unit converter 108 connected to the star conversion leg 153R.
Fig. 15 is a schematic view illustrating an overall configuration of a power conversion device of still another embodiment of the invention.
Fig. 16 is a schematic view illustrating an overall configuration of a power conversion device of still another embodiment of the invention.

### Description of Embodiments

### (1) Overall Configuration of Power Conversion Device of Embodiment of Invention

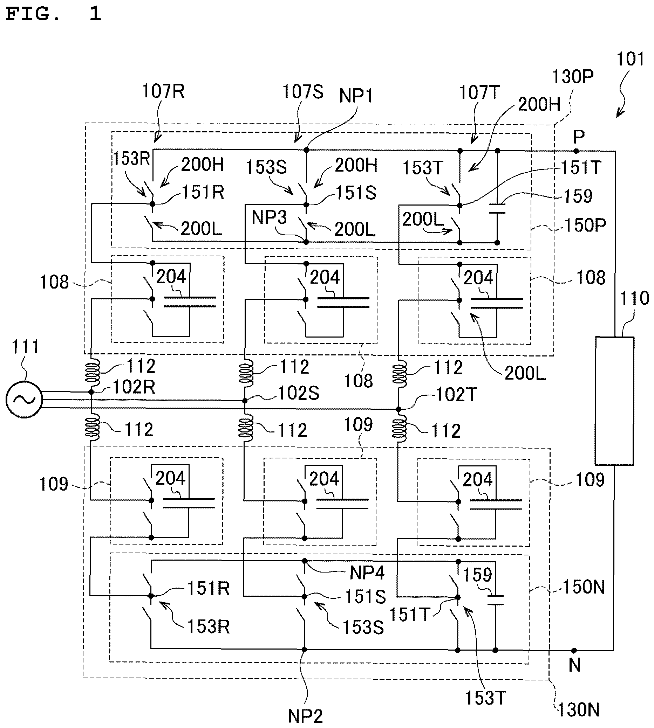

As illustrated in Fig. 1, in a power conversion device 101, terminals 102R, 102S, and 102T are respectively connected to an R-phase, an S-phase, and a T-phase of a three-phase alternating current through a transformer (not illustrated in Fig. 1), and are interconnected to a three-phase AC system 111. In the power conversion device 101, a DC device 110 is connected between a terminal P and a terminal N. The DC device 110 is drawn as a representative of a DC load such as a resistor, a DC power supply, another power conversion device, or the like. In this manner, the power conversion device 101 is a power conversion device that can convert AC power of the three-phase AC system 111 to DC power and supply the DC power to the DC device 110, can convert the DC power output from the DC device 110 to AC power and supply the AC power to the three-phase AC system 111 or to a three-phase AC motor, and can output a voltage close to a sinusoidal wave as in the MMC.

The power conversion device 101 includes a positive side power conversion unit 130P and a negative side power conversion unit 130N. The positive side power conversion unit 130P and the negative side power conversion unit 130N are connected to respective phases of the three-phase alternating current through the terminals 102R, 102S, and 102T as an AC connection unit. The positive side power conversion unit 130P includes a positive side star conversion unit 150P, and three unit converters 108, and the negative side power conversion unit 130N includes a negative side star conversion unit 150N, and three unit converters 109.

The positive side star conversion unit 150P and the negative side star conversion unit 150N have the same configuration, and thus description will be given of the positive side star conversion unit 150P as a representative. The positive side star conversion unit 150P is a power converter having a three-phase full bridge configuration, includes three star conversion legs 153R, 153S, and 153T, and a capacitor 159, and these are connected in parallel between a connection point NP1 and a connection point NP3 (between a connection point NP4 and a connection point NP2 in the case of the negative side star conversion unit 150N). The star conversion legs 153R, 153S, and 153T include a high side switch 200H and a low side switch 200L and these are connected in series.

In the positive side star conversion unit 150P, a switch connection point 151R between the high side switch 200H and the low side switch 200L of the star conversion leg 153R is connected to the terminal 102R through the unit converter 108 to be described later (the unit converter 109 in the negative side star conversion unit 150N) and a reactor 112, and is connected to the R-phase of the three-phase alternating current. A location between a connection point of three star conversion legs and a switch connection point to which the unit converter is connected is also referred to as "arm", and each arm is provided with one switch.

Similarly, in the positive side star conversion unit 150P, a switch connection point 151S between the high side switch 200H and the low side switch 200L of the star conversion leg 153S is connected to the S-phase of the three-phase alternating current through the unit converter 108, the reactor 112, and the terminal 102S, and a switch connection point 151T between the high side switch 200H and the low side switch 200L of the star conversion leg 153T is connected to the T-phase of the three-phase alternating current through the unit converter 108, the reactor 112, and the terminal 102T.

Here, in the power conversion device 101, the star conversion leg 153R, the unit converter 108, the reactor 112, the terminal 102R, the reactor 112, the unit converter 109, and the star conversion leg 153R are sequentially connected in series between the connection point NP1 and the connection point NP2. Similarly, the star conversion leg 153S, the unit converter 108, the reactor 112, the terminal 102S, the reactor 112, the unit converter 109, and the star conversion leg 153S are connected in series between the connection point NP1 and the connection point NP2, and the star conversion leg 153T, the unit converter 108, the reactor 112, the terminal 102T, the reactor 112, the unit converter 109, and the star conversion leg 153T are connected in series. In this manner, the unit converter 108 and the unit converter 109 are connected in series between the star conversion legs 153R, 153S, and 153T of the positive side star conversion unit 150P, and the star conversion legs 153R, 153S, and 153T of the negative side star conversion unit 150N. In this embodiment, a constituent element group connected in series between the connection point NP1 and the connection point NP2 is also referred to as a leg 107R, a leg 107S, and a leg 107T. The leg 107R, the leg 107S, and the leg 107T are connected in parallel.

In the positive side power conversion unit 130P of the power conversion device 101, respective phases of the three-phase alternating current are connected to the connection point NP1 of the star conversion legs 153R, 153S, and 153T, and respective phases of the three-phase alternating current is star-connected. This is also true of the negative side power conversion unit 130N, and respective phases of the three-phase alternating current are star-connected to the connection point NP2. The connection points NP1 and NP2 are not only connection points of the star conversion legs 153R, 153S, and 153T (the leg 107R, the leg 107S, and the leg 107T) connected in parallel but also neutral points of the star connection (hereinafter, the connection point NP1 is referred to as "first neutral point NP1", and the connection point NP2 is referred to as "second neutral point NP2").

Here, when a current flowing between the terminal 102R and 151R of the positive side star conversion unit 150P is set as an arm current IRP, a current flowing between the terminal 102S and 151S of the positive side star conversion unit 150P is set as an arm current ISP, and a current flowing between the terminal 102T and 151T of the positive side star conversion unit 150P is set as an arm current ITP, in the positive side power conversion unit 130P side of the power conversion device 101, respective phases of the three-phase alternating current are star-connected at the first neutral point NP1, and thus a total value of the arm currents (positive-phase AC components) on the positive side power conversion unit 130P side becomes zero (IRP + ISP + ITP = 0). According to this, ideally, an AC current component flowing through the capacitor 159 of the positive side star conversion unit 150P also becomes zero.

Similarly, when a current flowing between the terminal 102R and 151R of the negative side star conversion unit 150N is set as an arm current IRN, a current flowing between the terminal 102S and 151S of the negative side star conversion unit 150N is set as an arm current ISN, and a current flowing between the terminal 102T and of 151T the negative side star conversion unit 150N is set as an arm current ITN, in the negative side power conversion unit 130N side of the power conversion device 101, respective phases of the three-phase alternating current are star-connected at the second neutral point NP2, and thus a total value of the arm currents (positive-phase AC components) on the negative side power conversion unit 130N side becomes zero (IRN + ISN + ITN = 0) . According to this, ideally, an AC current flowing through the capacitor 159 of the negative side star conversion unit 150N also becomes zero. Note that, the terminal P is led out from the first neutral point NP1, and the terminal N is led out from the second neutral point NP2. In Fig. 1, for convenience, the terminal P or the terminal N is led out from a location having the same potential as in the first neutral point NP1 or the second neutral point NP2.

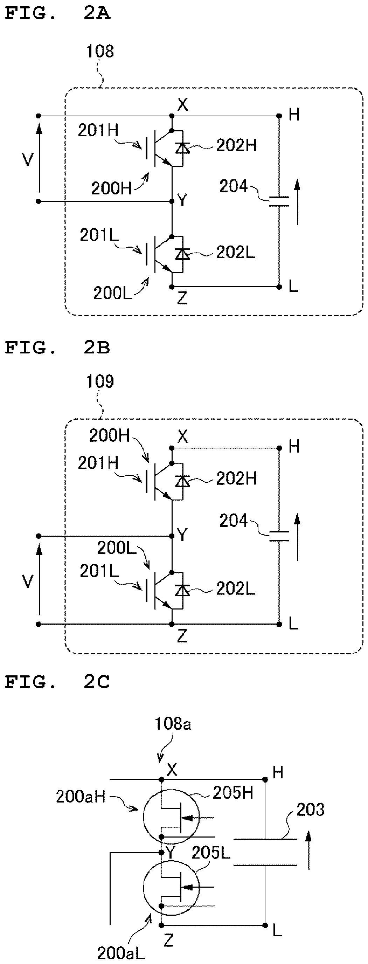

Next, the unit converters 108 and 109 will be described with reference to Fig. 2A and Fig. 2B. As illustrated in Fig. 2A, the unit converter 108 is a bidirectional chopper circuit including the high side switch 200H that includes a high side switching element 201H constituted by, for example, an IGBT, and a high side free wheeling diode 202H, the low side switch 200L that includes a low side switching element 201L constituted by, for example, an IGBT, and a low side free wheeling diode 202L, and a capacitor 204. The high side switch 200H has a configuration in which a positive electrode (a collector in the IGBT) side of the high side switching element 201H and a negative electrode side of the high side free wheeling diode 202H are connected to each other, a negative electrode (an emitter in the IGBT) side of the high side switching element 201H and a positive electrode side of the high side free wheeling diode 202H are connected to each other, and the high side switching element 201H and the high side free wheeling diode 202H are connected to each other in anti-parallel. Similarly, in the low side switch 200L, the low side switching element 201L and the low side free wheeling diode 202L are connected to each other in anti-parallel.

As described above, in the high side switch 200H and the low side switch 200L, by connecting the high side free wheeling diode 202H and the low side free wheeling diode 202L to the high side switching element 201H and the low side switching element 201L in anti-parallel, when a voltage is applied from the negative electrode side to the positive electrode side of the IGBT, a current is allowed to flow to the high side free wheeling diode 202H and the low side free wheeling diode 202L, and a current is prevented from flowing from the negative electrode of the IGBT to the positive electrode. According to this, it is possible to protect the IGBT. Note that, the positive electrode sides of the high side switching element 201H and the low side switching element 201L are respectively set as positive electrode sides of the high side switch 200H and the low side switch 200L. Note that, the positive side star conversion unit 150P, and the high side switch 200H and the low side switch 200L of the negative side star conversion unit 150N have a similar configuration as in the high side switch 200H and the low side switch 200L of the unit converter 108.

In the unit converter 108, the negative electrode side of the high side switch 200H and the positive electrode side of the low side switch 200L are connected to each other, and the high side switch 200H and the low side switch 200L are connected in series. The high side switch 200H and the low side switch 200L are connected to a control circuit (not illustrated), and are set to be turned on or off by a control signal from the control circuit. The capacitor 204 is connected to the high side switch 200H and the low side switch 200L, which are connected in series, in parallel.

In the unit converter 108, a positive electrode terminal is led out a connection point X between the capacitor 204 and the high side switch 200H, and a negative electrode terminal is led out a switch connection point Y between the high side switch 200H and the low side switch 200L.

The unit converter 108 outputs a voltage that is approximately equal to a voltage of the capacitor 204 between the positive electrode terminal and the negative electrode terminal (both ends of the leg in the unit converter) when the high side switch 200H is turned off and the low side switch 200L is turned on regardless of the arm currents IRP, ISP, and ITP. In this specification, this state is referred to as "the unit converter 108 is high". Note that, a voltage of a capacitor in this specification represents a voltage of the capacitor when the capacitor is charged, and an output voltage of the unit converter represents an output in the case of "high" unless otherwise stated.

In the unit converter 108, when the high side switch 200H is turned on, and the low side switch 200L is turned off, the positive electrode terminal and the negative electrode terminal are short-circuited, and an inter-terminal voltage is approximately equal to zero regardless of the arm currents IRP, ISP, and ITP. In this specification, this state is referred to "the unit converter 108 is low".

In the unit converter 108, in a case where the high side switch 200H and the low side switch 200L are turned on in combination, the capacitor 204 is short-circuited. According to this, the operation is prohibited.

In the unit converter 108, in a case where the high side switch 200H and the low side switch 200L are turned off in combination, a voltage between the positive electrode terminal and the negative electrode terminal depends on the polarity of a current flowing through the unit converter 108. In a case where the current is positive (in a case where a current flows from the positive electrode terminal to the negative electrode terminal), the output voltage is approximately equal to the voltage of the capacitor 204. In a case where a current is negative (in a case where a current flows from the negative electrode terminal to the positive electrode terminal), the inter-terminal output voltage is approximately equal to zero. In this manner, the unit converter 108 can perform control between "high" and "low" by switch control.

The unit converter 109 illustrated in Fig. 2B is different from the unit converter 108 in a position from which the positive electrode terminal and the negative electrode terminal are led out, and the other configurations are similar as in the unit converter 108. In the unit converter 109, the positive electrode terminal is led out the switch connection point Y, and the negative electrode terminal is led out a connection point Z between the low side switch 200L and the capacitor 204. The unit converter 109 can be controlled to "high" and "low" by a switching operation.

When the high side switch 200H is turned on and the low side switch 200L is turned off, the unit converter 109 outputs a voltage that is approximately equal to a voltage of the capacitor 204 between the positive electrode terminal and the negative electrode terminal (both ends of a leg in the unit converter) regardless of the arm currents IRN, ISN, and ITN, and becomes high.

When the high side switch 200H is turned off and the low side switch 200L is turned on, the positive electrode terminal and the negative electrode terminal are short-circuited, and the inter-terminal voltage is approximately equal to zero regardless of the arm current IRN, ISN, and ITN, and the unit converter 109 becomes low. An operation when the switches are turned on in combination and an operation when the switches are turned off in combination are similar as in the unit converter 108. Note that, as in a unit converter 108a illustrated in Fig. 2C, in a case where a bidirectional conductive FET or MOS-FET is used as a high side switching element 205H and a low side switching element 205L, and so-called synchronous rectification is performed, the free wheeling diodes (the high side free wheeling diode 202H and the low side free wheeling diode 202L) can be omitted from the unit converters 108 and 109.

In the unit converter 108, the positive electrode terminal is connected to the switch connection point 151R, 151S, or 151T of the positive side star conversion unit 150P, and the negative electrode terminal is connected to the reactor 112. In the unit converter 109, the positive electrode terminal is connected to the reactor 112, and the negative electrode terminal is connected to the switch connection point 151R, 151S, or 151T of the negative side star conversion unit 150N.

Next, an operation of the star conversion legs 153R, 153S, and 153T of the positive side star conversion unit 150P will be described. The high side switch 200H and the low side switch 200L of the star conversion legs 153R, 153S, and 153T are connected to a control circuit (not illustrated), and can be controlled to be turned on or off by the control circuit. The operations of the star conversion legs 153R, 153S, and 153T are similar to each other, and thus description will be given of the star conversion leg 153R as a representative.

The operation of the star conversion leg 153R is similar as in the unit converter 108. When the high side switch 200H is turned off and the low side switch 200L is turned on, the star conversion leg 153R outputs a first predetermined voltage that is approximately equal to a voltage of the capacitor 159 between the first neutral point NP1 and the switch connection point 151R (the switch connection point 151S in the star conversion leg 153S, and the switch connection point 151T in the star conversion leg 153T) regardless of the arm current IRP (the arm current ISP in the star conversion leg 153S, and the arm current ITP in the star conversion leg 153T), and becomes high.

When the high side switch 200H is turned on and the low side switch 200L is turned off, the first neutral point NP1 and the switch connection point 151R (the switch connection point 151S in the star conversion leg 153S, and the switch connection point 151T in the star conversion leg 153T) are short-circuited, and the star conversion leg 153R becomes low. An operation when the high side switch 200H and the low side switch 200L are in a different state is also similar as in the unit converter 108.

An operation of the star conversion legs 153R, 153S, and 153T of the negative side star conversion unit 150N is similar as in the unit converter 109. That is, when the high side switch 200H is turned on and the low side switch 200L is turned off, the star conversion leg 153R outputs a second predetermined voltage that is approximately equal to a voltage of the capacitor 159 between the switch connection point 151R (the switch connection point 151S in the star conversion leg 153S, and the switch connection point 151T in the star conversion leg 153T) and the second neutral point NP2 regardless of the arm current IRN (the arm current ISN in the star conversion leg 153S, and the arm current ITN in the star conversion leg 153T), and becomes high. When the high side switch 200H is turned off and the low side switch 200L is turned on, the switch connection point 151R (the switch connection point 151S in the star conversion leg 153S, and the switch connection point 151T in the star conversion leg 153T) and the second neutral point NP2 are short-circuited, and the star conversion leg 153R becomes low. An operation when the high side switch 200H and the low side switch 200L are in a different state is similar as in the unit converter 109. Note that, in this embodiment, the same capacitor is used as the capacitor 159 of the positive side star conversion unit 150P and the negative side star conversion unit 150N, and the capacitor 204 of the unit converters 108 and 109, and thus the first predetermined voltage and the second predetermined voltage, and the output voltage when the unit converters 108 and 109 are high are values approximately equal to each other.

As described above, in the positive side star conversion unit 150P, the first neutral point NP1 becomes the positive electrode terminal, and the switch connection points 151R, 151S, and 151T become the negative electrode terminal, and in the negative side star conversion unit 150N, the switch connection points 151R, 151S, and 151T become the positive electrode terminal, and the second neutral point NP2 becomes the negative electrode terminal. The unit converter 108 is connected to the switch connection points 151R, 151S, and 151T of the positive side star conversion unit 150P, and the unit converter 109 is connected to the switch connection points 151R, 151S, and 151T of the negative side star conversion unit 150N. At this time, in the legs 107R, 107S, and 107T, respective constituent elements are connected in series in a forward direction. Here, the "forward direction" represents that in a case where a positive electrode and a negative electrode are distinguished in the constituent elements, a positive electrode terminal of one constituent element and a negative electrode terminal of another constituent element are connected, and a connection is not established between positive electrode terminals of the constituent elements or negative electrode terminals of the constituent elements.

In the capacitor of the unit converter of the MMC, when a current flowing through the capacitor fluctuates, power flowing into the capacitor fluctuates, and in accordance with the fluctuation, an output voltage of the capacitor fluctuates. According to this, in the MMC of the related art, the capacitance of the capacitor of the unit converter is enlarged to reduce a ratio of a fluctuation amount of charges with respect to the total amount of charges accumulated in the capacitor so as to suppress a fluctuation of an output voltage. In contrast, in the power conversion device 101 of the invention, since a total value of the arm currents IRP, ISP, and ITP flowing through the positive side star conversion unit 150P, and a total value of the arm currents IRN, ISN, and ITN flowing through the negative side star conversion unit 150N are ideally zero (the sum of AC basic wave positive-phase components is zero), ideally, a fluctuation amount of AC power can be set to approximately zero, and it is possible to suppress a fluctuation of a voltage of the capacitor. According to this, in the positive side star conversion unit 150P and the negative side star conversion unit 150N, since a fluctuation of the voltage of the capacitor 159 can be suppressed, a capacitor with small capacitance can be used as the capacitor 159. Accordingly, in the positive side star conversion unit 150P and the negative side star conversion unit 150N, the capacitor is smaller in comparison to the unit converter of the MMC, and it is possible to downsize the device.

The reactor 112 is provided in the legs 107R, 107S, and 107T to suppress an overcurrent from flowing to the legs 107R, 107S, and 107T in a period in which leg voltages VR, VS, and VT which are voltages between the first neutral point NP1 and the second neutral point NP2 of the legs 107R, 107S, and 107T do not match each other. In addition, the reactor 112 attenuates a signal of a switching frequency that occurs in the legs 107R, 107S, and 107T. The reactor 112 is provided between each of the unit converters 108 and 109, and each of the terminals 102R, 102S, and 102T, but may be provided between each of the unit converters 108 and 109, and each of the switch connection points 151R, 151S, and 151T of the star conversion legs 153R, 153S, and 153T.

Next, the operation of the power conversion device 101 will be described by classifying the operation into the case of converting a direct current to an alternating current, and the case of converting an alternating current to a direct current. First, the case of converting a direct current to an alternating current by the power conversion device 101 will be described. In this case, as the DC device 110, a DC power transmission line (a case where the power conversion device 101 is a power conversion device on power reception side when viewed from the DC power transmission line), a DC power supply, a motor drive inverter that is performing regenerative braking, or the like is assumed.

Operations of respective legs are similar, and thus description will be given with focus given to the leg 107R. In addition, it is assumed that the capacitors 159 and 204 are charged to a DC voltage V that is determined in advance, a positive DC voltage +V is applied to the terminal P, and a negative DC voltage -V is applied to the terminal N by the DC device 110 (leg voltage VR = 2 V).

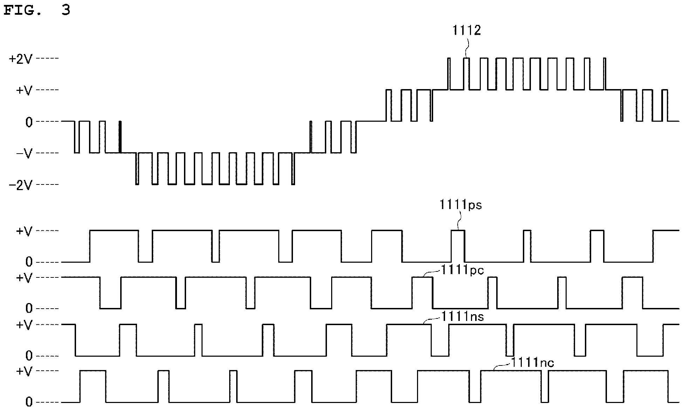

Here, Fig. 3 illustrates a voltage waveform 1112 of a voltage output from the terminal 102R (however, impedance of an external circuit connected to the terminal 102R is sufficiently large. If the impedance is small, the voltage is a voltage divided by the impedance of an external AC power source), a voltage waveform 1111ps of an output voltage of the star conversion leg 153R of the positive side star conversion unit 150P, a voltage waveform 1111pc of an output voltage of the unit converter 108, a voltage waveform 1111ns of an output voltage of the star conversion leg 153R of the negative side star conversion unit 150N, and a voltage waveform 1111nc of an output voltage of the unit converter 109. In Fig. 3, a horizontal direction represents time, and a vertical direction represents the output voltage. An output voltage value (AC-phase voltage) from the terminal 102R becomes a value obtained by subtracting a total value of an output voltage value of the star conversion leg 153R of the positive side star conversion unit 150P and an output voltage value of the unit converter 108 from a total value of an output voltage value of the star conversion leg 153R of the negative side star conversion unit 150N and an output voltage value of the unit converter 109.

Specifically, in the power conversion device 101, for example, when only the unit converter 109 is high, the terminal 102R can output +V, and when the star conversion leg 153R of the negative side star conversion unit 150N and the unit converter 109 are high, +2 V can be output from the terminal 102R. On the other hand, in the power conversion device 101, for example, when only the unit converter 108 is high, the terminal 102R can output -V, and when the star conversion leg 153R of the positive side star conversion unit 150P and the unit converter 109 are high, -2 V can be output from the terminal 102R. When all of the star conversion legs 153R of the positive side star conversion unit 150P and the negative side star conversion unit 150N, and all of the unit converters 108 and 109 are high or low, the power conversion device 101 outputs 0 from the terminal 102R.

Accordingly, the power conversion device 101 can output an AC voltage in the voltage waveform 1112 in Fig. 3 from the terminal 102R by controlling "high" and "low" of the star conversion leg 153R of the positive side star conversion unit 150P, the unit converter 108, the star conversion leg 153R of the negative side star conversion unit 150N, and the unit converter 109 so that the star conversion leg 153R of the positive side star conversion unit 150P, the unit converter 108, the star conversion leg 153R of the negative side star conversion unit 150N, and the unit converter 109 can output the voltage waveforms 1111ps, 1111pc, 1111ns, and 1111nc illustrated in Fig. 3. Note that, the voltage waveforms 1111ps, 1111pc, 1111ns, and 1111nc illustrated in Fig. 3 can be obtained by pulse width modulation (PWM)-controlling the output voltages of the star conversion leg 153R of the positive side star conversion unit 150P, the unit converter 108, the star conversion leg 153R of the negative side star conversion unit 150N, and the unit converter 109.

Next, the case of converting an alternating current to a direct current by the power conversion device 101 will be described. In this case, as the DC device 110, a DC power transmission line (a case where the power conversion device 101 is a power conversion device on power transmission side when viewed from the DC power transmission line), a DC load, or a motor drive inverter that is operating is assumed.

In this case, DC power is output to the DC device 110. The DC voltage applied to the DC device 110 is a total value of an output voltage of the star conversion leg 153R of the positive side star conversion unit 150P, an output voltage of the unit converter 108, an output voltage of the star conversion leg 153R of the negative side star conversion unit 150N, and an output voltage of the unit converter 109. Accordingly, it is possible to adjust the DC voltage applied to the DC device 110 by controlling "high" and "low" of the star conversion legs 153R of the positive side star conversion unit 150P and the negative side star conversion unit 150N, and the unit converters 108 and 109.

On the other hand, a current flowing through the DC device 110 is the sum of the arm currents flowing through the legs 107R, 107S, and 107T. Actually, the sum (IRP + ISP + ITP) of the arm currents on the positive side power conversion unit 130P side and the sum (IRN + ISN + ITN) of the arm currents on the negative side power conversion unit 130N side are the same value, and in a case where the arm currents IRP, ISP, ITP, IRN, ISN, and ITN do not include a zero-phase DC component, IRP + ISP + ITP is zero and IRN + ISN + ITN is zero, and thus power cannot be transmitted to the DC device 110. According to this, in order to supply power to the DC device 110, a DC voltage component of the leg voltages VR, VS, and VT is adjusted, and the zero-phase component of the arm currents IRP, ISP, ITP, IRN, ISN, and ITN, particularly, a DC current component is controlled.

### (2) Operation and Effect

In the above-described configuration, the power conversion device 101 has a configuration in which the respective phases (the R-phase, the S-phase, and the T-phase) of the three-phase alternating current are star-connected, and includes the star conversion units (the positive side star conversion unit 150P and the negative side star conversion unit 150N) which include the star conversion legs (153R, 153S, and 153T) each including two switches (the high side switch 200H and the low side switch 200L) connected in series and at least one capacitor 159, and the unit converters 108 and 109 which are connected to the star conversion legs of the star conversion unit in series. In the positive side star conversion unit 150P and the negative side star conversion unit 150N, the three star conversion legs 153R, 153S, and 153T, and the capacitor 159 are connected in parallel, each phase of the three-phase alternating current is connected to the switch connection point 151R, 151S, or 151T between the two switches of each of the star conversion legs 153R, 153S, and 153T through the unit converters 108 and 109, the connection point NP1 at which the three star conversion legs 153R, 153S, and 153T are connected is the neutral point of the star connection, the unit converters 108 and 109 connected to the R-phase are connected to the switch connection point 151R of the star conversion leg 153R, the unit converters 108 and 109 connected to the S-phase are connected to the switch connection point 151S of the star conversion leg 153S, and the unit converters 108 and 109 connected to the T-phase are connected to the switch connection point 151T of the star conversion leg 153T.

In the power conversion device 101, since a total value of the arm currents IRP, ISP, and ITP flowing through the positive side star conversion unit 150P, and a total value of the arm currents IRN, ISN, and ITN flowing through the negative side star conversion unit 150N are zero, ideally, a fluctuation amount of AC power of the capacitor 159 in the positive side star conversion unit 150P and the negative side star conversion unit 150N can be set to approximately zero, and it is possible to suppress a fluctuation of a voltage of the capacitor 159. According to this, in the power conversion device 101, since the fluctuation of the voltage of the capacitor 159 of the positive side star conversion unit 150P and the negative side star conversion unit 150N can be suppressed, a capacitor with small capacitance can be used as the capacitor of the positive side star conversion unit 150P and the negative side star conversion unit 150N. Accordingly, downsizing can be realized by using a small capacitor, when the number of capacitors is reduced, the number of frames supporting the capacitors can be reduced, and thus it is possible to downsize the power conversion device 101.

### (3) Other Embodiments

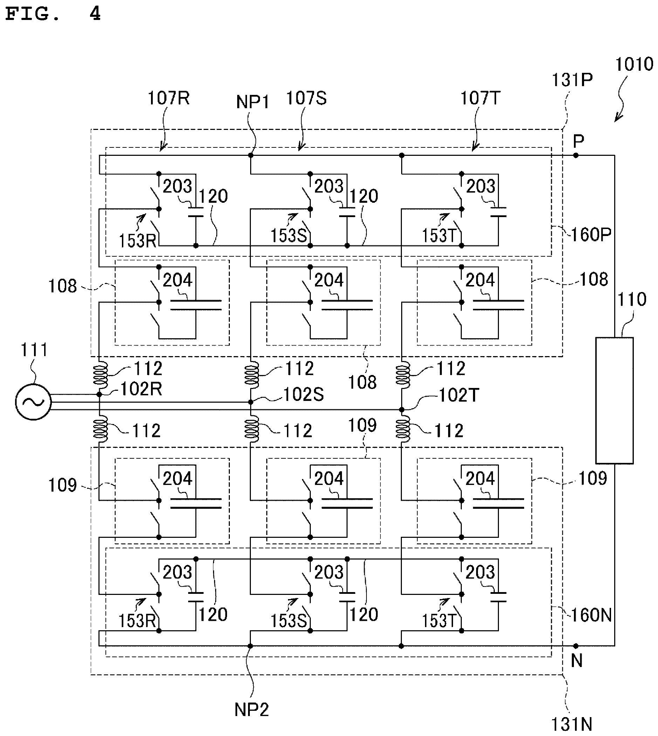

Note that, the invention is not limited to the above-described embodiment, and various modifications can be made within a range of the gist of the invention. For example, in the embodiment, description has been given of a case where the positive side star conversion unit 150P and the negative side star conversion unit 150N have a configuration in which the three star conversion legs 153R, 153S, and 153T and the capacitor 159 are connected in parallel. However, the invention is not limited to the case, and may employ a configuration in which in a positive side star conversion unit 160P of a positive side power conversion unit 131P, and a negative side star conversion unit 160N of a negative side power conversion unit 131N, three star conversion legs 153R, 153S, and 153T and three capacitors 203 are connected in parallel as in a power conversion device 1010 illustrated in Fig. 4. The power conversion device 1010 is approximately equivalent to the power conversion device 101 by setting a voltage of the capacitors 203 to the voltage of the capacitor 159 of the power conversion device 101.

In the power conversion device 1010, a positive side of each of the capacitors 203 is connected to a terminal on a high side switch 200H side of each of the star conversion legs 153R, 153S, and 153T, a negative side of each of the capacitors 203 is connected to a terminal on a low side switch 200L side of each of the star conversion legs 153R, 153S, and 153T, and the star conversion leg 153R and the capacitor 203 connected in parallel, the star conversion leg 153S and the capacitor 203 connected in parallel, and the star conversion leg 153T and the capacitor 203 connected in parallel are connected also in parallel. In this manner, the star conversion legs 153R, 153S, and 153T, and the capacitors 203 are arranged alternately in parallel. In the power conversion device 1010, since the star conversion leg 153R, the capacitor 203, the star conversion leg 153S, the capacitor 203, the star conversion leg 153T, and the capacitor 203 are connected in this order in parallel, the capacitor 203 can be disposed in the vicinity of each of the star conversion legs 153R, 153S, and 153T. In this manner, in the power conversion device 1010, each of the capacitors 203 and each of the star conversion legs 153R, 153S, and 153T can be disposed to be close to each other, and thus there is an advantage that parasitic inductance between each of the capacitors 203 and each of the star conversion legs 153R, 153S, and 153T can be reduced, and a surge voltage when switching the high side switch 200H and the low side switch 200L of the star conversion legs 153R, 153S, and 153T can be suppressed.

In addition, in the embodiment, description has been given of a case where the output voltage of the star conversion legs 153R, 153S, and 153T of the positive side star conversion unit 150P and the negative side star conversion unit 150N and the output voltage of the unit converters 108 and 109 are set to be equal to each other, but the invention is not limited to the case. A rated voltage of the capacitor of the positive side star conversion unit and the negative side star conversion unit may be set to be different from a rated voltage of the capacitor of the unit converter, and an output voltage of the star conversion legs may be set to be different from an output voltage of the unit converter. In this case, an effect of further reducing the capacitor is obtained. In addition, the rated voltage of the capacitor of the positive side star conversion unit 150P and the rated voltage of the capacitor of the negative side star conversion unit 150N may be set to be different from each other, and the output voltage of the star conversion legs of the positive side star conversion unit 150P and the output voltage of the star conversion legs of the negative side star conversion unit 150N may be set to be different from each other.

In the power conversion device 101 described in the embodiment and the power conversion device 1010 of the modification example, the unit converter 108 is connected between each of the terminals 102R, 102S, and 102T, and the positive side star conversion unit 150P (160P), and the unit converter 109 is connected between each of the terminals 102R, 102S, and 102T, and the negative side star conversion unit 150N (160N), but the invention is not limited thereto. The number of the unit converters 108 and 109 can be appropriately changed.

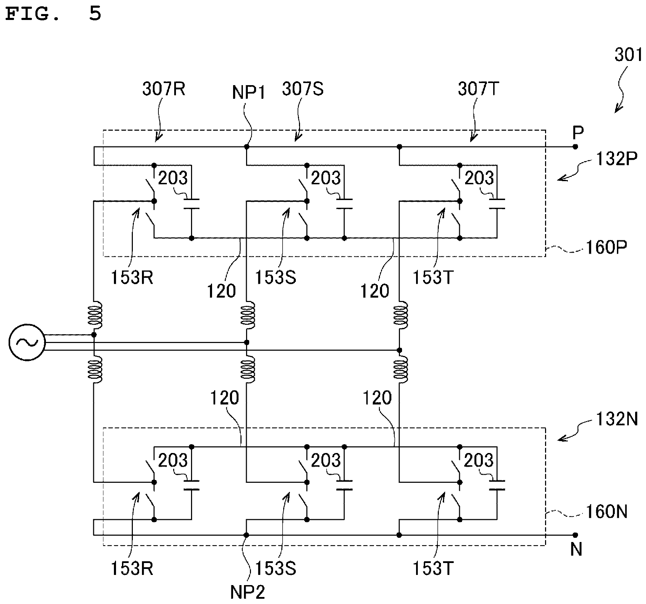

For example, as in a power conversion device 301 illustrated in Fig. 5, a positive side power conversion unit 132P and a negative side power conversion unit 132N may include only a positive side star conversion unit 160P and a negative side star conversion unit 160N, respectively, and the unit converters 108 and 109 connected to the positive side star conversion unit 160P and the negative side star conversion unit 160N may not be provided. Since the unit converters 108 and 109 are single-phase converters, a voltage fluctuation of the capacitor 204 is large at a low frequency. However, when the unit converters 108 and 109 are not connected, a single-phase converter does not exist, and thus even when operating at a low frequency, there is an advantage that an influence on the capacitor voltage fluctuation is slight.

In addition, the capacitor 203 of the positive side star conversion unit 160P and the capacitor 203 of the negative side star conversion unit 160N may be changed to capacitors with a different rated voltage in order for an output voltage of the capacitors to be different, each of the star conversion legs of the positive side star conversion unit may output a first predetermined voltage and a zero voltage at "high" and "low", and each of the star conversion legs of the negative side star conversion unit may output a second predetermined voltage different from the first predetermined voltage and a zero voltage at "high" and "low" . According to this, the power conversion device 301 can output a voltage in many levels in comparison to the related art, and the device can be downsized in comparison to the case of outputting a voltage in the same number of levels as in the method of the related art.

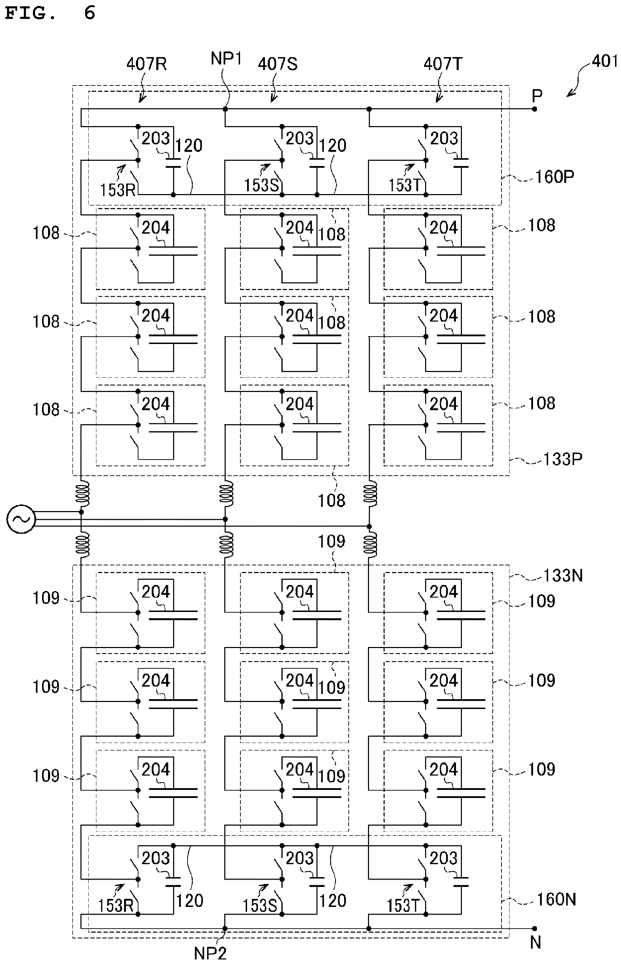

In addition, as in a power conversion device 401 illustrated in Fig. 6, a positive side power conversion unit 133P may be set to a configuration in which three unit converters 108 (also referred to as a first unit converter 108, a second unit converter 108, and a third unit converter 108 from a side closer to the star conversion legs 153R, 153S, and 153T) are connected in series between each of the terminals 102R, 102S, and 102T, and each of the star conversion legs 153R, 153S, and 153T of the positive side star conversion unit 160P, and a negative side power conversion unit 133N may be set to a configuration in which three unit converters 109 (also referred to as a first unit converter 109, a second unit converter 109, and a third unit converter 109 from a side closer to the star conversion legs 153R, 153S, and 153T) are connected in series between each of the terminals 102R, 102S, and 102T, and the star conversion legs 153R, 153S, and 153T of the negative side star conversion unit 160N.

In addition, when the number of the unit converters 108 and 109 which are connected in series between the terminals 102R, 102S, and 102T, and the positive side star conversion unit 150P, the negative side star conversion unit 150N, the positive side star conversion unit 160P and the negative side star conversion unit 160N are respectively set to n (n pieces from a first unit converter 108 and 109 to n^{th} unit converter 108 and 109) (a voltage of a capacitor of the positive side star conversion unit and the negative side star conversion unit is set as V), and output voltages of the unit converters 108 and 109 (that is, the voltage of the capacitor) are set to the same voltage V, an AC voltage output from the power conversion device of the invention can be controlled to an arbitrary multi-level waveform from 0 to ± (n+1) V, and the waveform of the AC voltage output from the power conversion device can be made to be closer to a sinusoidal wave by increasing the number n. In addition, in the power conversion device 401, the unit converters 108 and 109 connected in series include the same capacitor 204, and output the same voltage. However, in the unit converters 108 or 109 connected in series, rated voltages of capacitors of the unit converters may be set to be different from each other, and output voltages of the unit converters may be set to be different from each other.

In addition, in the power conversion device 401, a switching element that is used in the star conversion legs 153R, 153S, and 153T of the positive side star conversion unit 160P and the negative side star conversion unit 160N may be set as a high-voltage switching element (for example, a high withstand voltage IGBT to be described later) that can also be used at a high voltage, and a switching element that is used in the unit converters 108 and 109 may be set as a low-voltage and low-loss switching element. In this case, the withstand voltage of the switching element that is used in the star conversion legs 153R, 153S, and 153T is higher than the withstand voltage of the switching element that is used in the unit converters 108 and 109. In this manner, since the switching element that is used in the star conversion legs 153R, 153S, and 153T of the positive side star conversion unit 160P and the negative side star conversion unit 160N is set as the high-voltage switching element, the output voltage of the capacitor 203 that is used in the positive side star conversion unit 160P and the negative side star conversion unit 160N can be set to be high, and the output voltage of the capacitor 204 that is used in the unit converters 108 and 109 can be set to be low. As a result, in the unit converters 108 and 109, the size of the capacitor 204 can be set to be small, and the switching element can be changed to the low-voltage and low-loss switching element, and thus the power conversion device 401 can be further downsized. As the high-voltage switching element, for example, an IGBT, a GCT, a MOS-FET formed from SiC, or the like can be used, and as the low-voltage and low-loss switching element, an FET formed from GaN, a MOS-FET, or the like can be used.

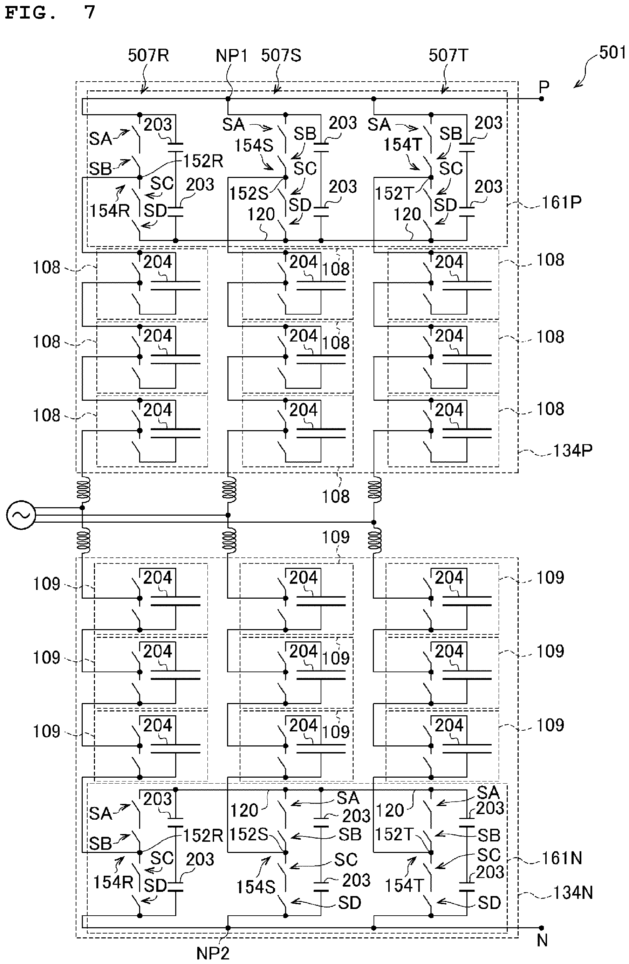

In addition, as in a power conversion device 501 illustrated in Fig. 7, the power conversion device of the invention may have a configuration in which in a positive side star conversion unit 161P and a negative side star conversion unit 161N, two capacitors 203 connected in series, and star conversion legs 154R, 154S, and 154T are connected in parallel. The star conversion legs 154R, 154S, and 154T have a configuration in which four switches including a high-high side switch SA and a high-low side switch SB (also referred to as "high side switch series body"), and a low-high side switch SC and a low-low side switch SD (also referred to as "low side switch series body") are connected in series. According to this, in the star conversion legs 154R, 154S, and 154T, a total withstand voltage of the switching elements which constitute the switches connected in series can be set to be higher in comparison to the above-described embodiment, and can be set to be higher than the withstand voltage of an switching element that constitutes the switches of the unit converters 108 and 109. In the star conversion legs 154R, 154S, and 154T, a switch connection point of the high side switch series body and the low side switch series body, that is, switch connection points 152R, 152S, and 152T of the high-low side switch SB and the low-high side switch SC are connected to the unit converter 108 or 109. Each arm has a configuration in which switches are connected in series. According to this, the power conversion device 501 can output a higher voltage, and an output voltage range of the positive side star conversion unit 161P (negative side star conversion unit 161N), and a total value range of output voltages of the three unit converters 108 (unit converters 109) connected in series can be made to be approximately equal to each other. That is, a maximum value of at least one or more output voltages in the star conversion legs 154R, 154S, and 154T, and a maximum value of a total value of the output voltages of the unit converters 108 (unit converters 109) (in this embodiment, three unit converters) connected to the star conversion legs can be made to be approximately the same as each other. The reason for this is as follows. Since the number of switches connected in series in the star conversion legs 154R, 154S, and 154T increases, a total withstand voltage of the switches increases, it is possible to withstand a higher DC voltage, and a capacitor with larger capacitance can be used as the capacitor 203. In addition, a capacitor voltage of a capacitor (in this modification example, a total voltage of the two capacitors 203 connected in series) of the positive side star conversion unit 161P (negative side star conversion unit 161N), that is, a DC voltage of both ends of at least one or more of the star conversion legs 154R, 154S, and 154T, and a total value of DC voltages of both ends of legs in the three unit converters 108 (unit converters 109) connected to the star conversion legs can be set to be approximately equal to each other. This example has an advantage that a high voltage can be output by connecting switches in series. In order to output a higher voltage, the number of the capacitors 203 connected in series or the switches connected in series in the arm may be further increased. The positive side star conversion unit 161P and the negative side star conversion unit 161N output a two-level voltage differently from an NPC 3-level converter.

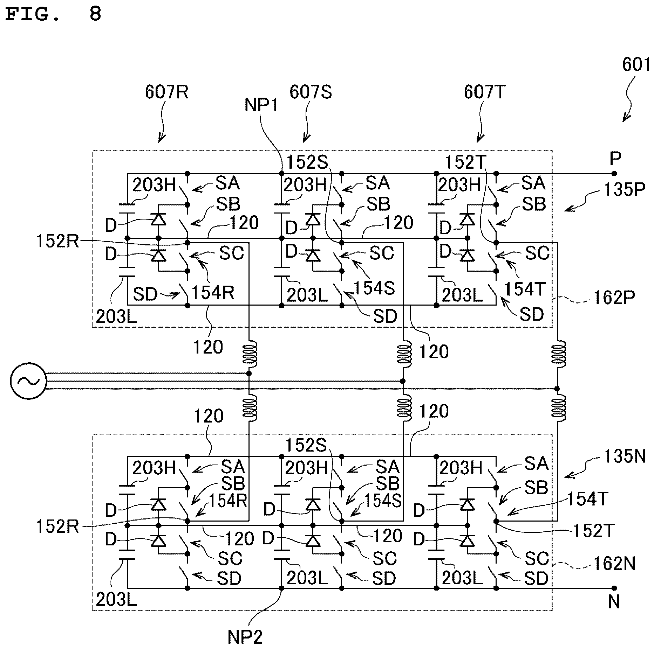

In the above-described embodiment, description has been given of a case where the positive side star conversion unit 150P (negative side star conversion unit 150N) is a two-level converter capable of outputting the first predetermined voltage (second predetermined voltage) and a zero voltage. The invention is not limited to this. For example, as in a power conversion device 601 illustrated in Fig. 8, a positive side star conversion unit 162P and a negative side star conversion unit 162N may be three-level converters in which the star conversion legs 154R, 154S, and 154T output three kinds of voltages to be described later between the switch connection points 152R, 152S, and 152T, and the neutral point.

In this case, for example, the positive side star conversion unit 162P has a configuration in which the star conversion legs 154R, 154S, and 154T including four switches of the high-high side switch SA, the high-low side switch SB, the low-high side switch SC, and the low-low side switch SD connected in series, and three capacitor series bodies including a high side capacitor 203H and a low side capacitor 203L connected in series are connected in parallel. In addition, in the positive side star conversion unit 162P, three diode series bodies in which two diodes D are connected in series are connected in anti-parallel between a connection point of the high-high side switch SA and the high-low side switch SB of each of the star conversion legs 154R, 154S, and 154T and a connection point of the low-high side switch SC and the low-low side switch SD, respectively, and a connection point of the diodes D of each of the diode series bodies, and a connection point of the high side capacitor 203H and the low side capacitor 203L are connected to each other by a conducting wire 120. The negative side star conversion unit 162N has a similar configuration.

The star conversion legs 154R, 154S, and 154T of the positive side star conversion unit 162P can output an output voltage of the high side capacitor 203H as a first predetermined voltage and can output a total value of output voltages of the high side capacitor 203H and the low side capacitor 203L as a third predetermined voltage between the switch connection points 152R, 152S, and 152T, and the first neutral point NP1 under switch control by a control circuit. Similarly, the star conversion legs 154R, 154S, and 154T of the negative side star conversion unit 162N can output an output voltage of the high side capacitor 203H as a second predetermined voltage and can output a total value of output voltages of the high side capacitor 203H and the low side capacitor 203L as a fourth predetermined voltage between the switch connection points 152R, 152S, and 152T, and the second neutral point NP2 under switch control by the control circuit. According to this configuration, the power conversion device 601 can output a voltage in many levels in comparison to a case where the positive side star conversion unit and the negative side star conversion unit are two-level converters, and the device can be downsized in comparison to the case of outputting a voltage in the same number of levels by using only the two-level converter.

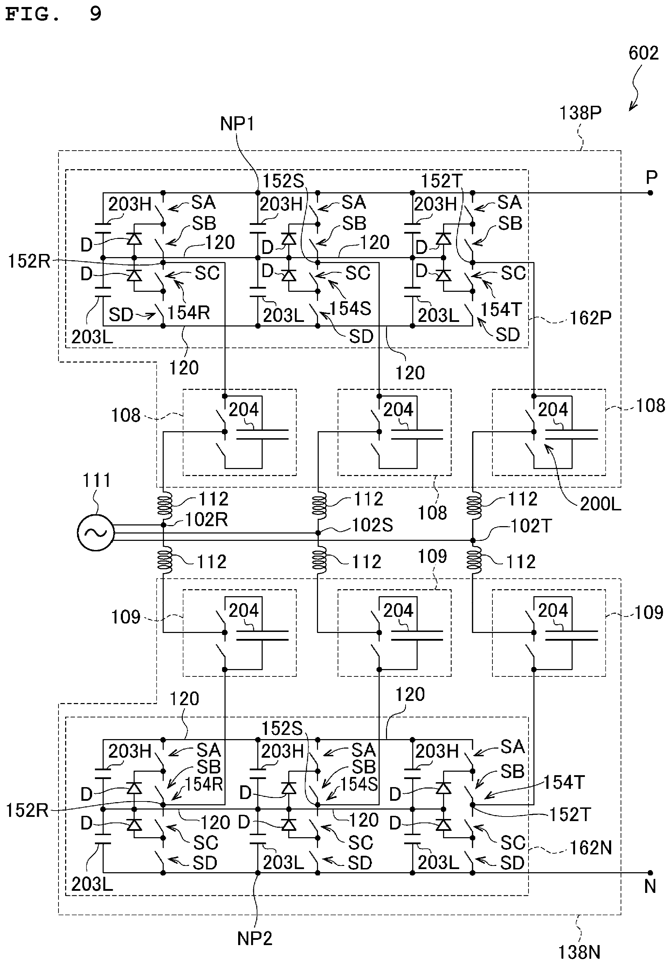

In addition, as in a power conversion device 602 illustrated in Fig. 9, the positive side star conversion unit 150P and the negative side star conversion unit 150N of the power conversion device 101 illustrated in Fig. 1 may be changed to the positive side star conversion unit 162P and the negative side star conversion unit 162N which are the above-described three-level converters. In this case, a positive side power conversion unit 138P includes the positive side star conversion unit 162P and three pieces of the unit converters 108, each of the unit converters 108 is connected to each of the switch connection points 152R, 152S, and 152T of the star conversion legs 154R, 154S, and 154T of the positive side star conversion unit 162P in series. In addition, a negative side power conversion unit 138N includes the negative side star conversion unit 162N, and three pieces of the unit converters 109, and each of the unit converters 109 is connected to each of the switch connection points 152R, 152S, and 152T of the star conversion legs 154R, 154S, and 154T of the negative side star conversion unit 162N in series. Each of the unit converters 108 is connected to each of the star conversion legs 154R, 154S, and 154T of the positive side star conversion unit 162P in series, but the invention is not limited thereto, and the number of the unit converters 108 connected to each of the star conversion legs 154R, 154S, and 154T in series may be two or three or greater. This is also true of the negative side star conversion unit 162N and the unit converters 109.

In the case of this embodiment, since the high side capacitor 203H and the low side capacitor 203L of the positive side star conversion unit 162P and the negative side star conversion unit 162N are constituted by the same capacitor, the first predetermined voltage and the second predetermined voltage are equal to each other, and the third predetermined voltage and the fourth predetermined voltage are equal to each other. Note that, the configuration of the positive side star conversion unit 162P and the negative side star conversion unit 162N as the three-level converter is not particularly limited. The three capacitor series bodies of the positive side star conversion unit 162P and the negative side star conversion unit 162N may be integrated as one capacitor series body.

In addition, the first predetermined voltage and the second predetermined voltage may be different from each other, and the third predetermined voltage and the fourth predetermined voltage may be different from each other. In this case, the high side capacitor 203H and the low side capacitor 203L of the positive side star conversion unit 162P, and the high side capacitor 203H and the low side capacitor 203L of the negative side star conversion unit 162N are constituted by using capacitors of which rated voltages are different from each other, and an output voltage thereof is set to be different. For example, the output voltage of the high side capacitor 203H and the low side capacitor 203L of the positive side star conversion unit 162P is set to be 1.8 kV, and the output voltage of the high side capacitor 203H and the low side capacitor 203L of the negative side star conversion unit 162N is set to be 0.6 kV. According to this configuration, the positive side star conversion unit 162P can output 1.8 kV (first predetermined voltage), 3.6 kV (third predetermined voltage), and a zero voltage, and the negative side star conversion unit 162N can output 1.2 kV (second predetermined voltage), 0.6 kV (fourth predetermined voltage), and a zero voltage. As a result, the power conversion device 601 can output AC voltages expressed in nine levels at a pitch of 0.6 kV.

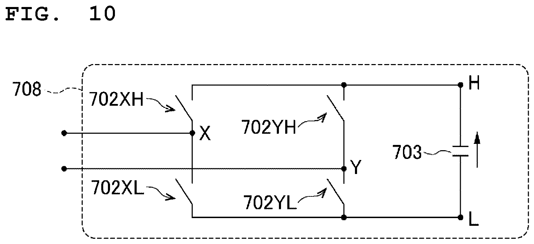

In the above-described embodiment, description has been given of a case where the bidirectional chopper circuit is used as the unit converters 108 and 109, but the invention is not limited thereto. A circuit, which includes an energy storage element such as a capacitor and a battery, which is a circuit of at least two terminals, and which can output at least a positive voltage or a zero voltage between the two terminals, may be used. For example, as in a unit converter 708 illustrated in Fig. 10, a full bridge circuit type is also possible. The unit converter is also applicable to any one of the power conversion devices described above. The unit converter 708 is a three-level converter that can output three kinds of voltages including predetermined positive and negative voltages ±V, and a zero voltage by controlling high side switches 702XH and 702YH, and low side switches 702XL and 702YL. The power conversion device of the invention can reverse the polarity between the terminal P and the terminal N by using the unit converter 708. This full bridge circuit configuration is also applicable to the star conversion legs of the positive side star conversion unit and the negative side star conversion unit. In this case, a configuration in which the high side switch 702XH and the low side switch 702XL connected in series, and the high side switch 702YH and the low side switch 702YL connected in series are connected in parallel corresponds to the star conversion legs. For example, a connection point X between the high side switch 702XH and the low side switch 702XL is connected to the first neutral point NP1 or the second neutral point NP2, and a switch connection point Y between the high side switch 702YH and the low side switch 702YL is connected to any one of respective phases of a three-phase alternating current. In addition, three pieces of the star conversion legs and at least one capacitor 703 are connected in parallel. When the three star conversion legs and at least one capacitor are connected in parallel, it is possible to constitute the positive side star conversion unit and the negative side star conversion unit which are three-level converters capable of outputting three kinds of voltages between the switch connection point Y and the neutral point.

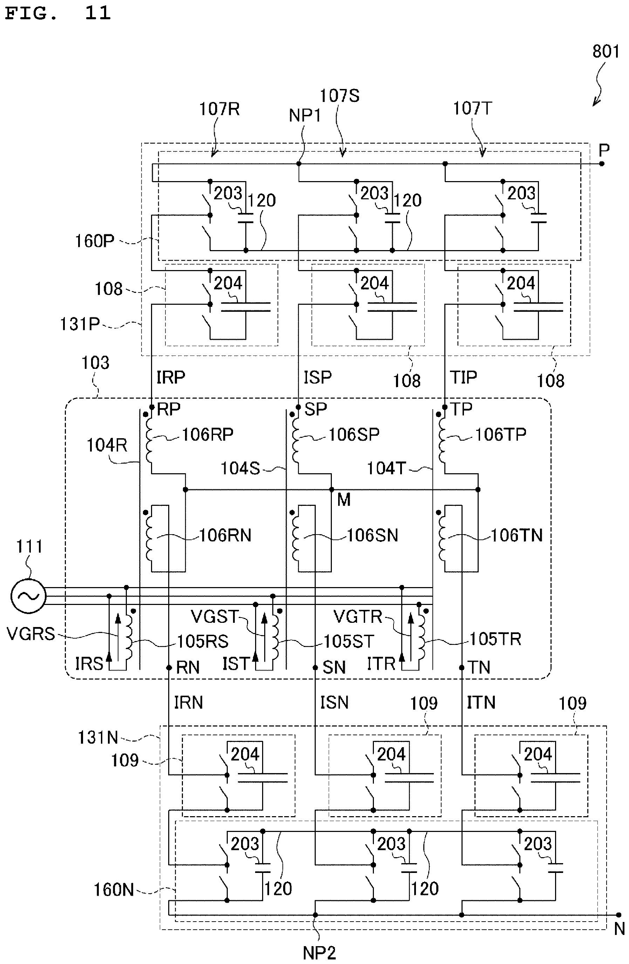

In the above-described embodiment, description has been given of a case where a three-phase alternating current converted by the power conversion device 101 is interconnected to the three-phase AC system 111 through a transformer (not illustrated), but the invention is not limited thereto. The power conversion device 101 may include a transformer. For example, in a power conversion device 801 illustrated in Fig. 11, as an AC connection unit, a transformer 103 that is the same as a transformer disclosed in Japanese Patent No. 6121582 is provided, transformation is also performed by the power conversion device 801 in addition to power conversion, and AC power converted from DC power is directly interconnected to the three-phase AC system 111. Since the transformer 103 is provided in the power conversion device 801, the reactor 112 can be omitted. In the power conversion device 801, the switch connection points of the star conversion legs of the positive side star conversion unit 160P are respectively connected to terminals RP, SP, and TP of the transformer 103, and the unit converter 108 is provided between each of the switch connection points and each of the terminals RP, SP, and TP. In addition, in the power conversion device 801, the switch connection points of the star conversion legs of the negative side star conversion unit 160N are respectively connected to terminals RN, SN, and TN of the transformer 103, and the unit converter 109 is provided between each of the switch connection points and each of the terminals RN, SN, and TN.

In this manner, the transformer 103 that outputs a voltage to each of the star conversion legs is connected between the star conversion legs of the positive side star conversion unit 160P and the star conversion legs of the negative side star conversion unit 160N in series. Note that, an AC power source may be inserted in the power conversion device as an AC connection unit instead of the transformer 103. In this case, the AC voltage source is connected instead of six windings including positive side secondary windings 106RP, 106SP, and 106TP, and negative side secondary windings 106RN, 106SN, and 106TN to be described later.

An example of a configuration of the transformer 103 provided in the power conversion device 801 will be described. The power conversion device 801 is obtained by providing the transformer 103 in the power conversion device 1010 illustrated in Fig. 4. The transformer 103 includes iron cores 104R, 104S, and 104T, primary windings 105RS, 105ST, and 105TR, the positive side secondary windings 106RP, 106SP, and 106TP, and the negative side secondary windings 106RN, 106SN, and 106TN.

The positive side secondary winding 106RP is wound around the iron core 104R, the positive side secondary winding 106SP is wound around the iron core 104S, and the positive side secondary winding 106TP is wound around the iron core 104T. In each of the positive side secondary windings 106RP, 106SP, and 106TP, one end is connected to the unit converter 108 of the positive side power conversion unit 131P through the terminals RP, SP, or TP, and the other end is connected to the negative side secondary winding 106RN, 106SN, or 106TN. In addition, the other end of each of the positive side secondary windings 106RP, 106SP, and 106TP is connected to a connection point M and is Y-connected.

The negative side secondary winding 106RN is wound around the iron core 104R, the negative side secondary winding 106SN is wound around the iron core 104S, and the negative side secondary winding 106TN is wound around the iron core 104T. In each of the negative side secondary windings 106RN, 106SN, and 106TN, one end is connected to the unit converter 109 of the negative side power conversion unit 131N through the terminal RN, SN, or TN, and the other end is connected to the positive side secondary winding 106RP, 106SP, or 106TP. In addition, the other end of each of the negative side secondary windings 106RN, 106SN, and 106TN is connected to the connection point M and is Y-connected.

In this manner, a neutral point of the Y-connected positive side secondary windings 106RP, 106SP, and 106TP, and a neutral point of the Y-connected negative side secondary windings 106RN, 106SN, and 106TN are electrically connected to each other at the connection point M. In addition, the positive side secondary windings 106RP, 106SP, and 106TP, and the negative side secondary windings 106RN, 106SN, and 106TN are magnetically coupled to each other to have opposite polarities for each phase. According to this, a DC magnetomotive force generated by the positive side secondary windings 106RP, 106SP, and 106TP, and a DC magnetomotive force generated by the negative side secondary windings 106RN, 106SN, and 106TN can be cancelled, and it is possible to prevent a DC magnetic flux from being generated in the iron cores 104R, 104S, and 104T.

In addition, the primary windings 105RS, 105ST, and 105TR are respectively wound around the iron cores 104R, 104S, and 104T. The primary windings 105RS, 105ST, and 105TR are A-connected, and are connected to the three-phase AC system 111.

In the transformer 103 illustrated in Fig. 11, the primary windings 105RS, 105ST, and 105TR are magnetically coupled to have the same polarity as in the positive side secondary windings 106RP, 106SP, and 106TP. However, even in a case where the primary windings 105RS, 105ST, and 105TR are magnetically coupled to have the same polarity as in the negative side secondary windings 106RN, 106SN, and 106TN, a similar effect can be obtained.

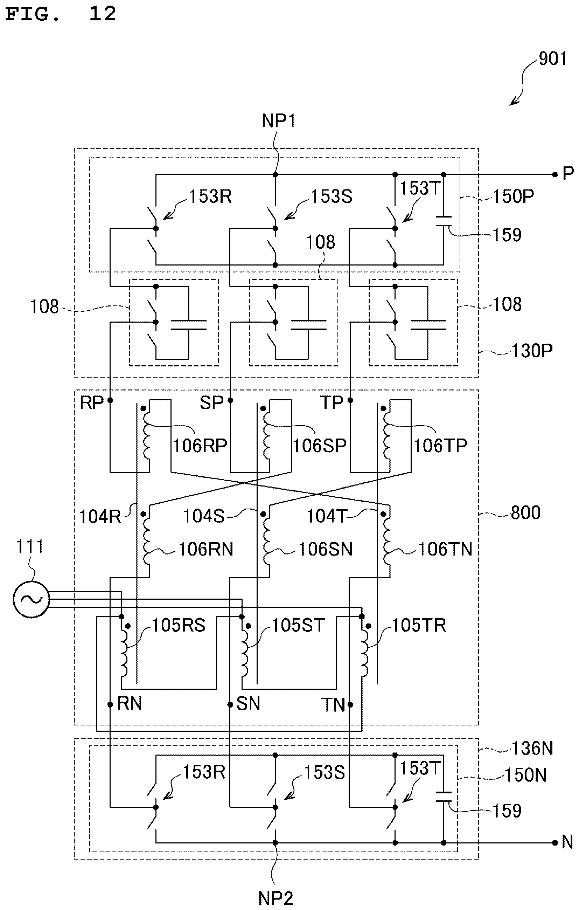

In addition, as in a power conversion device 901 illustrated in Fig. 12, a transformer 800 similar to a transformer disclosed in International Publication WO2010/116806 may be provided as the AC connection unit instead of the transformer 103. The transformer 800 is different from the transformer 103 in connection between the positive side secondary windings 106RP, 106SP, and 106TP, and the negative side secondary windings 106RN, 106SN, and 106TN, and windings with different phases are magnetically coupled to each other. In the transformer 800, the positive side secondary winding 106RP and the negative side secondary winding 106TN are connected to each other, the positive side secondary winding 106SP and the negative side secondary winding 106RN are connected to each other, and the positive side secondary winding 106TP and the negative side secondary winding 106SN are connected to each other. When employing the coupling type, a DC magnetic flux is cancelled, and thus the transformer 800 can be prevented from being saturated.

The power conversion device 901 illustrated in Fig. 12 has a configuration in which the transformer 800 is inserted between the positive side power conversion unit 130P and the negative side power conversion unit 136N. The negative side power conversion unit 136N is different from the negative side power conversion unit 130N illustrated in Fig. 1 in that the unit converter 109 is not provided, but the other configurations are the same as each other. In the embodiment, AC voltage waveforms output from the positive side power conversion unit and the negative side power conversion unit have polarities opposite to each other. On the other hand, when employing the configuration as in the power conversion device 901, the AC voltage waveforms output from the positive side power conversion unit 130P and the negative side power conversion unit 136N have the same polarity.

For example, in the power conversion device 901, the star conversion leg 153R of the positive side star conversion unit 150P and the negative side star conversion unit 150N, and the unit converter 108 are controlled to output a voltage that is a difference between a DC voltage desired to be output between the terminal P and the terminal N, and a voltage desired to be output to the secondary winding 106RN of the transformer 800. According to the output form control, the power conversion device 901 can output an arbitrary AC voltage and an arbitrary DC voltage. Note that, in the power conversion device 901, the positive side power conversion unit 130P includes the unit converter 108, but the unit converter 108 may be removed from the positive side power conversion unit 130P, and the negative side power conversion unit 136N may be substituted with the negative side power conversion unit 130N including the unit converter 109.

In addition, output voltages of the two positive side star conversion unit 150P and negative side star conversion unit 150N may be different from each other. In this case, for example, when the output voltage of the capacitors are set to approximately 7.2 kV (the capacitor 159 of the positive side star conversion unit 150P), approximately 3.6 kV (the capacitor 159 of the negative side star conversion unit 150N), and approximately 1.8 kV (the capacitor of the unit converter 108) by setting the star conversion legs 153R, 153S, and 153T of the positive side star conversion unit 150P to a power semiconductor element (switching element) two-series configuration with a withstand voltage of 6.5 kV, by setting the star conversion legs 153R, 153S, and 153T of the negative side star conversion unit 150N to a power semiconductor element (switching element) one-series configuration with a withstand voltage of 6.5 kV, and by setting the switches of the unit converter 108 to a power semiconductor element one-series configuration with a withstand voltage of 3.3 kV, in addition to eight-level voltage output with a small number of stages, 6.6 kV that is a main rated voltage of a domestic power distribution system and a motor can be output to the secondary winding of the transformer 800. Note that, the transformer in this specification has a structure in which the secondary windings interlink with an AC magnetic flux, and this is set as a requirement of the transformer.

In the embodiment, description has been given of a case where the AC power is converted to the DC power and the DC power is converted to the AC power by the power conversion device of the invention, but there is no limitation to the case. The invention is also applicable to a case where an AC voltage is converted to an AC voltage (AC/AC converter). Actually, when two pieces of the power conversion devices 101 illustrated in Fig. 1 are prepared, and the terminals P of the two power conversion devices 101 are connected, and the terminals N of the two power conversion devices 101 are connected, power is converted in the order of AC-DC-AC, and the AC/AC converter can be constituted.

In this case, even in a case where a conducting wire is provided between the capacitors 159 of the positive side star conversion units 150P of the two power conversion devices 101 to electrically connect the capacitors 159 in parallel, and even in a case where a conducting wire is provided between the capacitors 159 of the positive side star conversion units 150P of the other power conversion device 101 to electrically connect the capacitors 159 in parallel, these cases are equivalent to a case where the terminals P of the two power conversion devices 101 are connected, and the terminals N of the two power conversion devices 101 are connected. In addition, the two capacitors 159 connected in parallel can be substituted with one capacitor 159.

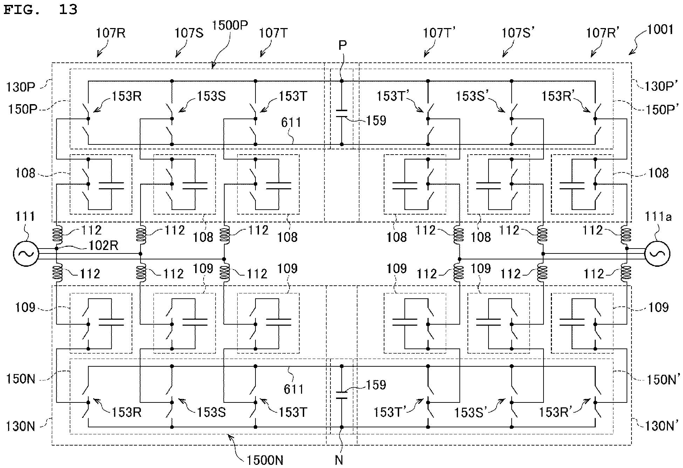

A power conversion device 1001 illustrated in Fig. 13 has a configuration in which the terminals P of the two power conversion devices are connected to each other, the terminals N of the two power conversion devices are connected to each other, capacitors of two positive side star conversion units 150P and 150P' are connected in parallel with the conducting wire 611, and the two capacitors connected in parallel are substituted with one capacitor 159. In the power conversion device 1001, similarly, capacitors of two negative side star conversion units 150N and 150N' are connected in parallel with the conducting wire 611, and the two capacitors 159 connected in parallel are substituted with one capacitor 159.

In this manner, the power conversion device 1001 has a configuration in which one positive side star conversion unit 150P and the other positive side star conversion unit 150P' share the capacitor 159, and one negative side star conversion unit 150N and the other negative side star conversion unit 150N' share the capacitor 159. Actually, the power conversion device 1001 includes a positive side star conversion unit 1500P and a negative side star conversion unit 1500N in which the star conversion legs 153R, 153S, and 153T in which each of the R-phase, the S-phase, and the T-phase of the three-phase AC system 111 on an input side is connected to the switch connection point of the high side switch and the low side switch, star conversion legs 153R', 153S', and 153T' in which each of a u-phase, a v-phase, and a w-phase of a three-phase AC system 111a on an output side is connected to the switch connection point of the high side switch and the low side switch, and the capacitor 159 are connected in parallel. In this case, the capacitor 159 can be integrated as one, and thus the device can be downsized. Description has been given of a case where the switch connection point of the high side switch and the low side switch of each of the star conversion legs 153R', 153S', and 153T' is connected to each of the u-phase, the v-phase, and the w-phase of the three-phase AC system 111a on the output side. However, for example, the switch connection point may be connected to each of a u-phase, a v-phase, and a w-phase of a three-phase AC motor.

In addition, in the power conversion device 1001, AC power that is input to the positive side star conversion unit 1500P and the negative side star conversion unit 1500N is supplied to the three-phase AC system 111a on the output side through the star conversion legs 153R', 153S', and 153T' connected to the three-phase AC system 111a on the output side, and is cancelled. Accordingly, capacitor capacitance can be further reduced in comparison to capacitor capacitance when the capacitor 159 is individually provided.

In addition, in the embodiment, the DC current component of the arm current IRP flowing through the leg 107R is common between the positive side star conversion unit 150P and the unit converter 108, and the DC current component of the arm current IRN is common between the negative side star conversion unit 150N and the unit converter 108. This is also true of the leg 107S, and the leg 107T. Accordingly, a ratio of DC power output from the positive side star conversion unit 150P, the negative side star conversion unit 150N, and the unit converters 108 and 109 is equal to a ratio of DC voltage output from the positive side star conversion unit 150P, the negative side star conversion unit 150N, and the unit converters 108 and 109. In a static state, since received AC power and output DC power are equal to each other, it is necessary for a ratio of AC power received by the positive side star conversion unit 150P, the negative side star conversion unit 150N, and the unit converters 108 and 109 to be approximately the same as a DC voltage ratio output from the positive side star conversion unit 150P, the negative side star conversion unit 150N, and the unit converters 108 and 109. However, in the power conversion device 1001 of this embodiment, the conducting wire 611 becomes a route for bypassing a DC current component, and thus it is not necessary to be bound by the restriction. Accordingly, there is an effect of reducing a DC current by receiving much AC power with the positive side star conversion unit 1500P and the negative side star conversion unit 1500N, and by reducing AC power of the unit converters 108 and 109.

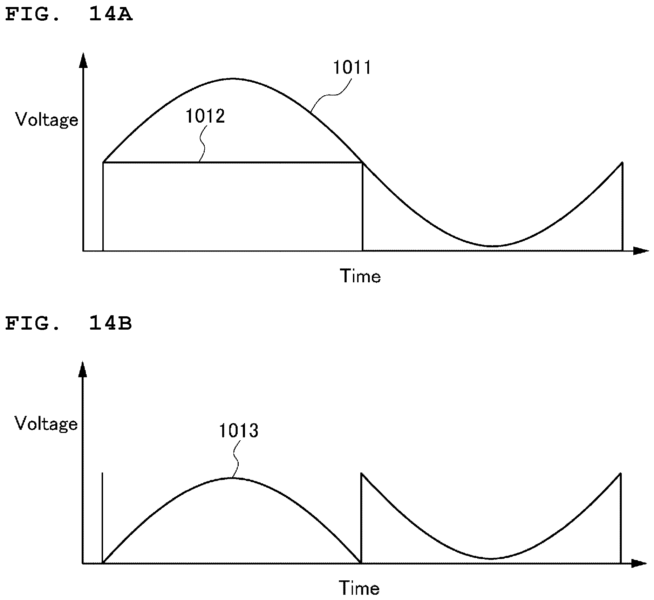

In Fig. 14A, the horizontal axis represents time and the vertical axis represents a voltage. Fig. 14A is a graph illustrating a voltage waveform 1011 of a voltage desired to be output between the terminal 102R and the terminal P, and a voltage waveform 1012 of an output voltage of the star conversion leg 153R of the positive side star conversion unit 1500P. In Fig. 14B, the horizontal axis represents time and the vertical axis represents a voltage. Fig. 14B is a graph illustrating a voltage waveform 1013 of an output voltage of the unit converter 108 connected to the star conversion leg 153R. In the case of outputting a voltage like the voltage waveform 1011 between the terminal 102R and the terminal P, since it is preferable that a waveform of the output voltage is a single-pulse waveform in the star conversion leg 153R, for example, a single pulse such as the voltage waveform 1012 is output. Actually, a control circuit (not illustrated) of the star conversion leg 153R controls switches of the star conversion leg 153R, and causes the star conversion leg 153R to output a single pulse. According to this, for example, the unit converter 108 is controlled to output a difference voltage such as the voltage waveform 1013 between the voltage desired to be output between the terminal 102R and the terminal P and the output voltage of the star conversion leg 153R. In a case where a plurality of the unit converters 108 are connected in series, a total value of the output voltages of the unit converters 108 is controlled in this manner.

In the power conversion device 1001, as described above, in a case where the star conversion leg 153R and the unit converter 108 output approximately the same voltage waveform, the output voltage of the unit converter 108 becomes the half of the output voltage desired to be output. An AC fundamental wave component of the voltage waveform 1013 is obviously smaller than the half voltage of the voltage waveform 1011 desired to be output. Since the AC power of the unit converter 108 is small, the output DC power of the unit converter 108 can be small, and the DC current of the unit converter 108 can be small. In addition, the star conversion leg 153R is one-pulse switched, and thus there is an advantage that a switching loss can be reduced. In addition, in a power factor 1 operation, the star conversion leg 153R is zero-current switched, and ideally, a switching loss does not occur. As described above, in the power conversion device 1001, a further loss reduction effect can be expected.

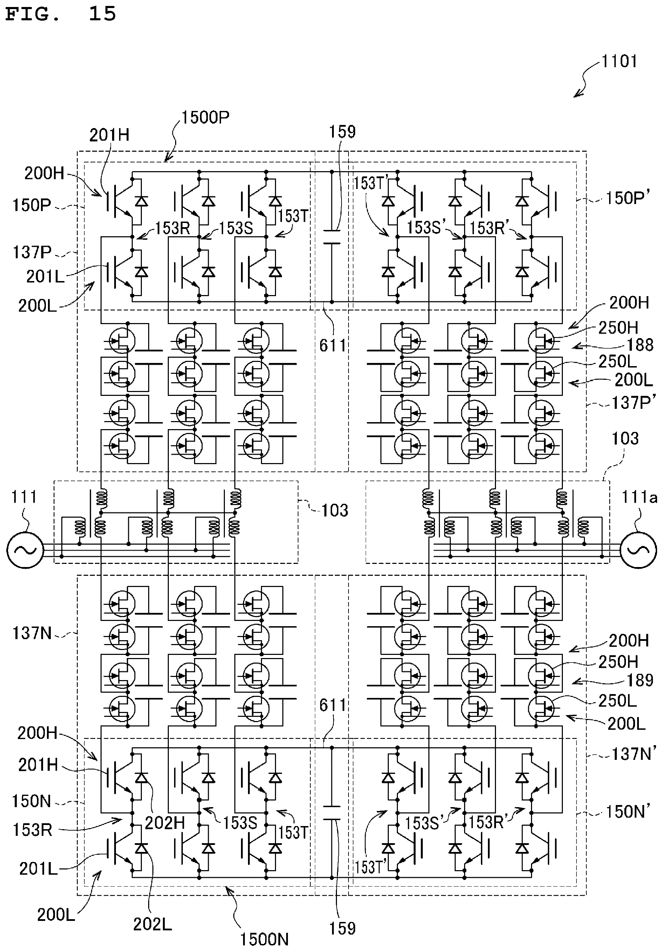

In addition, as in a power conversion device 1101 illustrated in Fig. 15, the high side switching element 201H and the low side switching element 201L which constitute the high side switch 200H and the low side switch 200L of each of the star conversion legs 153R, 153S, and 153T of the positive side star conversion unit 1500P and the negative side star conversion unit 1500N may be set as a high withstand voltage IGBT, and the unit converters 108 and 109 may be substituted with unit converters 188 and 189 in which the high side switch 200H and the low side switch 200L are set as low-voltage and low-loss switching elements 250H and 250L such as an FET formed from GaN on a Si substrate. In the power conversion device 1101, the transformer 103 is provided instead of a reactor.

As described above, in the power conversion device 1101, to perform control for a one-pulse operation in which a single pulse is sequentially output as an output voltage as described above, since the high withstand voltage IGBT (switching element) in which a conduction loss is small but a switching loss is large is used as the switches of the star conversion legs 153R, 153S, and 153T in which the number of times of switching is relatively small, and the low-voltage and low-loss switching element in which the switching loss is small is used as the switches of the unit converters 188 and 189 in which the number of times of switching is relatively large, it is possible to perform low-loss power conversion without using a special technology such as series connection of power semiconductor elements. In addition, in a case where the FET formed from GaN is a double gate type bidirectional conduction type FET, further low loss is realized. In addition, when the FET is formed on inexpensive Si, an economic burden is also small.

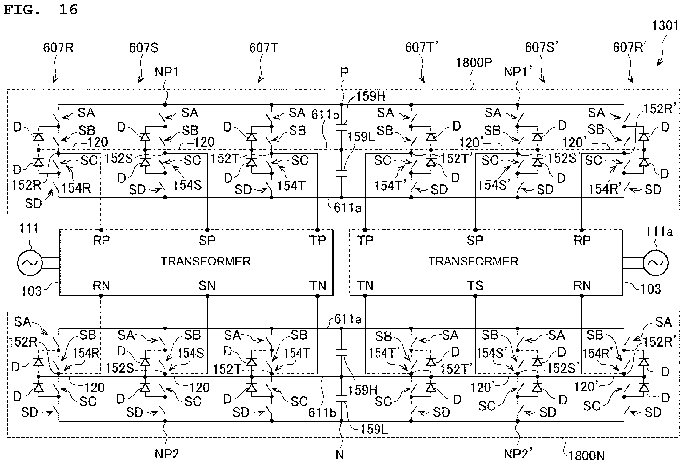

The positive side star conversion unit 1500P and the negative side star conversion unit 1500N of the power conversion device 1001 are two-level converters. However, the positive side star conversion unit 1500P and the negative side star conversion unit 1500N of the power conversion device 1001 may be set as a three-level converter as described above as in the embodiment. For example, a power conversion device 1301 illustrated in Fig. 16 includes the positive side star conversion unit 1500P and the negative side star conversion unit 1500N which are three-level converters, a positive side transformer 103, and a negative side transformer 103.

In the power conversion device 1301, a positive side star conversion unit 1800P has a configuration in which the star conversion legs 154R, 154S, and 154T, star conversion legs 154R', 154S', and 154T', and a capacitor series body in which a high side capacitor 159H and a low side capacitor 159L are connected in series are connected in parallel. The star conversion legs 154R, 154S, and 154T has a configuration in which four switches including the high-high side switch SA, the high-low side switch SB, the low-high side switch SC, and the low-low side switch SD are connected in series, the switch connection points 152R, 152S, and 152T between the high-low side switch SB and the low-high side switch SC are connected to terminals RP, SP, and TP of a transformer 103 on an input side, respectively, an R-phase, an S-phase, and a T-phase of a three-phase AC system 111 on an input side are connected to the switch connection points 152R, 152S, and 152T of the star conversion legs 154R, 154S, and 154T, respectively, through the transformer 103 on the input side.

The star conversion legs 154R', 154S', and 154T' have a configuration in which four switches including a high-high side switch SA, a high-low side switch SB, a low-high side switch SC, and a low-low side switch SD are connected in series, switch connection points 152R', 152S', and 152T' between the high-low side switch SB and the low-high side switch SC are connected to terminals RP, SP, and TP of a transformer 103 on an output side, a u-phase, a v-phase, and a w-phase of a three-phase AC system 111 on an output side are connected to the switch connection points 152R', 152S', and 152T' of the star conversion legs 154R', 154S', and 154T', respectively, through the transformer 103 on the output side. In addition, in the star conversion legs 154R, 154S, and 154T, and the star conversion legs 154R', 154S', and 154T', a diode series body in which two diodes D are connected in series is connected between a connection point of the high-high side switch SA and the high-low side switch SB, and a connection point of the low-high side switch SC and the low-low side switch SD in anti-parallel. In addition, the connection point of the diodes D of the diode series body, and a connection point of the high side capacitor 159H and the low side capacitor 159L are connected to each other by a conducting wire 611b. A negative side star conversion unit 1800N has a similar configuration.

According to the configuration, the star conversion legs 154R, 154S, 154T, 154R', 154S', and 154T' of the positive side star conversion unit 1800P can output a first predetermined voltage, a third predetermined voltage, or a zero voltage, and the star conversion legs 154R, 154S, 154T, 154R', 154S', and 154T' of the negative side star conversion unit 1800N can output a second predetermined voltage, a third predetermined voltage, or a zero voltage. The first predetermined voltage and the second predetermined voltage may be set to the same voltage, and the third predetermined voltage and the fourth predetermined voltage may be set to the same voltage. In addition, the first predetermined voltage, the second predetermined voltage, the third predetermined voltage, and the fourth predetermined voltage may be set to values different from each other.

For example, an output voltage of the high side capacitor 159H and the low side capacitor 159L of the positive side star conversion unit 1800P is set to 1.8 kV, and an output voltage of the high side capacitor 203H and the low side capacitor 203L of the negative side star conversion unit 1800N is set to 0.6 kV. In this configuration, the positive side star conversion unit 1800P can output 1.8 kV (first predetermined voltage), 3.6 kV (third predetermined voltage), and a zero voltage, and the negative side star conversion unit 1800N can output 1.2 kV (second predetermined voltage), 0.6 kV (fourth predetermined voltage), and a zero voltage. As a result, the power conversion device 1301 can perform conversion into an AC voltage of the three-phase AC system 111, and can output AC voltages expressed in nine levels at a pitch of 0.6 kV to the u-phase, the v-phase, and the w-phase of the three-phase alternating current on the output side.

### (4) Application of Power Conversion Device of Invention

For example, the power conversion device of the invention can be used in a power-generating system for supplying power generated by a generator with sunlight, wind power, or the like to a power system, a motor drive system for driving an AC motor or a DC motor, a power interconnection system for connecting power systems to each other, and the like. In the power-generating system, for example, the power conversion device is used as an inverter that converts DC power generated by a generator to AC power.

In the power-generating system, for example, a capacitor is inserted between the terminal P and the terminal N of the power conversion device 101 illustrated in Fig. 1, and the terminal P and the terminal N are set as an input terminal of DC voltage generated by the generator. In addition, the generator is connected between the terminal P and the terminal N, the terminals 102R, 102S, and 102T are connected to the power system, and the generator and the power system are connected to each other through the power conversion device. In the power-generating system, the power conversion device 101 may be provided with a control device that converts a DC voltage input to the power conversion device 101 to a voltage in which a predetermined voltage is added to a system voltage, and outputs the voltage from the power conversion device 101 to the power system.

In the motor drive system, the power conversion device can be used as an inverter in which a power supply and a motor are connected through the power conversion device of the invention, and which converts a DC voltage of a DC voltage source as the power supply to an AC voltage, and supplies the AC voltage to an AC motor, a converter that converts an AC voltage of an AC voltage source as a power supply to a DC voltage, and supplies the DC voltage to a DC motor, an AC/AC converter that converts an AC voltage of a power system as a power supply to a predetermined AC voltage, and supplies the AC voltage to a motor, and the like. At this time, the motor drive system may be provided with a control device that controls the number of revolutions of the motor by controlling an output voltage of the power conversion device, or the like.

In the power interconnection system, power systems are connected to each other through the power conversion device of the invention, and power transmission and power reception are performed between the power systems. For example, two pieces of the power conversion devices 101 illustrated in Fig. 1 may be prepared, terminals P of one of the power conversion devices 101 and the other power conversion device 101 may be connected by an electric wire, terminals N thereof may be connected by an electric wire, power transmission between the power conversion devices 101 may be performed with a direct current, and the two power system may be interconnected. In addition, for example, the two power systems may be directly interconnected through the power conversion device 1001 by using an AC/AC converter type power conversion device as in the power conversion device 1001 illustrated in Fig. 13.

### Reference Signs List

- 101: Power conversion device
- 102R, 102S, 102T: Terminal
- 107R, 107S, 107T: Leg
- 108,: 109 Unit converter
- 110: DC device
- 111: Three-phase AC system
- 112: Reactor
- 151R, 151S, 151T: Switch connection point
- 153R, 153S, 153T: Star conversion leg
- 150P: Positive side star conversion unit
- 150N: Negative side star conversion unit
- 159, 204: Capacitor
- NP1: First neutral point
- NP2: Second neutral point

## Claims

1. Apower conversion device having a configuration in which respective phases of a three-phase alternating current are star-connected, comprising:
a star conversion unit that includes three star conversion legs, each including two switches connected in series, and at least one capacitor; and
a unit converter that is connected to each of the star conversion legs of the star conversion unit in series,
wherein in the star conversion unit, the three star conversion legs and the capacitor are connected in parallel, each phase of the three-phase alternating current is connected to a switch connection point between the two switches of each of the star conversion legs through the unit converter, and a connection point at which the three star conversion legs are connected is a neutral point of the star connection, and
the unit converter is connected to the switch connection point of each of the star conversion legs.

2. The power conversion device according to claim 1,
wherein the unit converter includes a capacitor, and the capacitor of the unit converter and the capacitor of the star conversion unit are connected to each other through the switches.

3. The power conversion device according to claim 1 or 2,
wherein a DC current flows between the star conversion unit and the unit converter.

4. The power conversion device according to any one of claims 1 to 3,
wherein the unit converter is a bidirectional chopper circuit.

5. The power conversion device according to any one of claims 1 to 4,
wherein the star conversion unit includes at least three capacitors, and at least one of the capacitors is connected to the star conversion legs in parallel, and the star conversion legs, to which the capacitor is connected in parallel, are connected in parallel.

6. The power conversion device according to any one of claims 1 to 5,
wherein two pieces of the star conversion units are provided, and the unit converter is connected between the star conversion leg of one of the star conversion units and the star conversion leg of the other star conversion unit in series.

7. The power conversion device according to any one of claims 1 to 6,
wherein the star conversion unit is a three-level converter in which the star conversion legs output three kinds of voltages between the switch connection point and the neutral point.

8. The power conversion device according to any one of claims 1 to 7,
wherein in an arm of the star conversion legs, switches are connected in series.

9. The power conversion device according to any one of claims 1 to 8,
wherein a maximum value of an output voltage of the star conversion legs, and a maximum value of a total value of output voltages of the unit converters connected to the star conversion legs are approximately the same as each other.

10. The power conversion device according to any one of claims 2 to 9,
wherein a DC voltage of both ends of the star conversion legs, and a total value of DC voltages of both ends of legs in the unit converters connected to the star conversion legs are approximately the same as each other.

11. The power conversion device according to any one of claims 1 to 10,
wherein a withstand voltage of a switching element that constitutes the switches of the star conversion unit is higher than a withstand voltage of a switching element that constitutes a switch of the unit converter connected to each of the star conversion legs.

12. The power conversion device according to any one of claims 1 to 11,
wherein each of the three star conversion legs includes at least four pieces of the switches connected in series, each phase of the three-phase alternating current is connected to a switch connection point of a high side switch series body in which at least two of the switches are connected in series, and a low side switch series body in which at least two of the switches are connected in series through the unit converter.

13. The power conversion device according to any one of claims 1 to 12,
wherein at least two pieces of the capacitors connected in series are connected to the star conversion legs in parallel.

14. The power conversion device according to any one of claims 1 to 13,
wherein the star conversion unit further includes three pieces of the star conversion legs in which the switch connection point is connected to any one of phases of a three-phase alternating current on an output side.

15. The power conversion device according to claim 14, further comprising:
a control circuit that controls the switches of the star conversion legs,
wherein the control circuit outputs a single pulse to the star conversion legs.

16. The power conversion device according to any one of claims 6 to 15,
wherein an AC connection unit that outputs a voltage to each of the star conversion legs is connected between the star conversion leg of one of the star conversion units and the star conversion leg of the other star conversion unit in series.

17. The power conversion device according to claim 16,
wherein the AC connection unit is an AC voltage source or a transformer.

18. The power conversion device according to claim 16 or 17,
wherein the capacitor of the one star conversion unit and the capacitor of the other star conversion unit are different in a rated voltage.

19. Apower conversion device having a configuration in which respective phases of a three-phase alternating current are star-connected, comprising:
a positive side star conversion unit and a negative side star conversion unit which include three star conversion legs, each including two switches connected in series, and at least one capacitor,
wherein in the positive side star conversion unit, the three star conversion legs and the capacitor are connected in parallel, each phase of the three-phase alternating current is connected to a switch connection point between the two switches of each of the star conversion legs, a connection point at which the three star conversion legs are connected is a first neutral point of the star connection, and a first predetermined voltage or a zero voltage is output between the switch connection point of each of the star conversion legs and the first neutral point, and
in the negative side star conversion unit, the three star conversion legs and the capacitor are connected in parallel, each phase of the three-phase alternating current is connected to a switch connection point between the two switches of each of the star conversion legs, a connection point at which the three star conversion legs are connected is a second neutral point of the star connection, and a second predetermined voltage different from the first predetermined voltage or a zero voltage is output between the switch connection point of each of the star conversion legs and the second neutral point.

20. The power conversion device according to claim 19,
wherein the positive side star conversion unit is a three-level converter that outputs the first predetermined voltage, a third predetermined voltage, or a zero voltage between the switch connection point of each of the star conversion legs and the first neutral point, and
the negative side star conversion unit is a three-level converter that outputs the second predetermined voltage, a fourth predetermined voltage, or a zero voltage between the switch connection point of each of the star conversion legs and the second neutral point.

21. The power conversion device according to claim 19 or 20,
wherein a unit converter is connected to the switch connection point of each of the star conversion legs of the positive side star conversion unit or the negative side star conversion unit.

22. The power conversion device according to claim 20,
wherein a unit converter is connected to the switch connection point of each of the star conversion legs of the positive side star conversion unit or the negative side star conversion unit, and
an output voltage of the unit converter is different from the first predetermined voltage, the second predetermined voltage, the third predetermined voltage, and the fourth predetermined voltage.

23. The power conversion device according to any one of claims 19 to 22,
wherein the positive side star conversion unit further includes three pieces of the star conversion legs in which the switch connection point is connected to any one of phases of a three-phase alternating current on an output side, and
the negative side star conversion unit further includes three pieces of the star conversion legs in which the switch connection point is connected to any one of the phases of the three-phase alternating current on the output side.

24. Apower conversion device having a configuration in which respective phases of a three-phase alternating current are star-connected, comprising:
two star conversion units which include three star conversion legs, each including two switches connected in series, and at least one capacitor, and in which the three star conversion legs and the capacitor are connected in parallel, and a connection point at which the star conversion legs and the capacitor are connected is a neutral point of the star connection; and
a unit converter that is connected to each of the star conversion legs in series through a switch connection point between the two switches of each of the star conversion legs,
wherein in one of the star conversion units, each phase of the three-phase alternating current is connected to the switch connection point of each of the star conversion legs through the unit converter,
in the other star conversion unit, each phase of a three-phase alternating current different from the three-phase alternating current is connected to the switch connection point of each of the star conversion legs through the unit converter, and
the one star conversion unit and the other star conversion unit are connected to each other.

25. The power conversion device according to claim 24,
wherein the one star conversion unit and the other star conversion unit are connected to each other by sharing the capacitor.

26. A power-generating system that connects a power generator and a power system through the power conversion device according to any one of claims 1 to 25.

27. A motor drive system that connects a power supply and a motor through the power conversion device according to any one of claims 1 to 25.

28. A power interconnection system that connects power systems through the power conversion device according to any one of claims 1 to 25.
